Europäisches Patentamt

(19) European Patent Office

Office européen des brevets

(11) Publication number : **0 055 998**
**B2**

(12) # NEW EUROPEAN PATENT SPECIFICATION

(45) Date of publication of the new patent specification :
**09.09.87**

(51) Int. Cl.⁴ : **B 23 B 29/04**

(21) Application number : **82200175.6**

(22) Date of filing : **18.09.79**

(60) Publication number of the earlier application in accordance with Art. 76 EPC : **0010074**

(54) **Tool element.**

(43) Date of publication of application :
**14.07.82 Bulletin 82/28**

(45) Publication of the grant of the patent :
**03.10.84 Bulletin 84/40**

(45) Mention of the opposition decision :
**09.09.87 Bulletin 87/37**

(84) Designated contracting states :
**AT BE CH DE FR GB IT NL**

(56) References cited :
**AT-B-    11 791**
**CH-A-   249 179**
**SE-B-   401 469**
**US-A- 3 186 501**
**US-A- 3 491 629**

(73) Proprietor : **Santrade Ltd.**
**Alpenquai 12 P.O. Box 321**
**CH-6002 Luzern (CH)**

(72) Inventor : **Andersson, Ken Göte Eskil**
**Sörbyvägen 27**
**S-810 22 Arsunda (SE)**

(74) Representative : **Eriksson, Kjell et al**
**Sandvik AB Patent Department**
**S-811 81 Sandviken (SE)**

## Description

The invention relates to a tool element for a machine tool comprising a tool body which has an insert seat for receiving an insert. The tool body is provided with an abutment surface abutting a corresponding surface of a holder body and is further provided with means to keep the tool body nonrotational with respect to the holder body. An expansible shank is connected to the tool body and receivable in a bore of the holder body.

Typically, tool elements of the above type are mounted on tool holders which comprise an elongated shaft having a generally rectangular or round cross section. The shaft is secured to a machine tool, such as a lathe, usually by means of two or three screws.

In machines using previously known types of tool holders the latter have to be replaced by another holder when the type of cutting inserts is exchanged, which results in high handling costs. Besides the elongated shaft requires a lot of room, which causes problems to the machine designer. Further, this technique is difficult to apply in a mechanized exchange of tools.

In order to overcome the above problems it has been suggested in Swedish patent specification no. 401 469 and in Swiss patent specification no. 249 179 to mount the cutting insert on a separate tool element which can be clamped against the main body of the tool holder by means of a drawbar.

In the first of these two prior art designs a shaft on the tool element projects into a recess in the forward end of the drawbar.

The shaft is provided with a cam surface on its one side adapted for cooperation with a complementary cam surface in the recess. During clamping of the tool element a relative movement along the cam surfaces causes the shaft to be moved in the lateral direction until it abuts a supporting surface in the recess opposite to the cam surface therein. Due to the high cutting forces acting on the tool element during the working operation it has been found that this connection between the tool element and the holder body is not rigid enough.

In the prior art design disclosed in Swiss patent specification No. 249 179 the tool element is clamped against V-shaped end surfaces on the holder body by means of a drawbar which is attached to the tool element through a threaded connection. Due to this threaded connection a mechanized exchange of tool elements is difficult to achieve.

The object of the present invention is to set forth a tool element for a machine tool which can be mounted on a holder body with a satisfactory rigidity, and thus an accurate positioning of the cutting insert, while making possible mechanized exchange of the tool element.

This and other objects of the invention are attained by the characterized features stated in the appending claims.

The present application discloses subject-matter which is claimed in the patent application EP 79 850084.9 (published (6.04.80) as EP-A-0 010 074).

The invention is described in detail in the following description with reference to the accompanying drawings in which three embodiments are shown by way of example. It is to be understood that these embodiments are only illustrative of the invention and that various modifications thereof may be made within the scope of the claims.

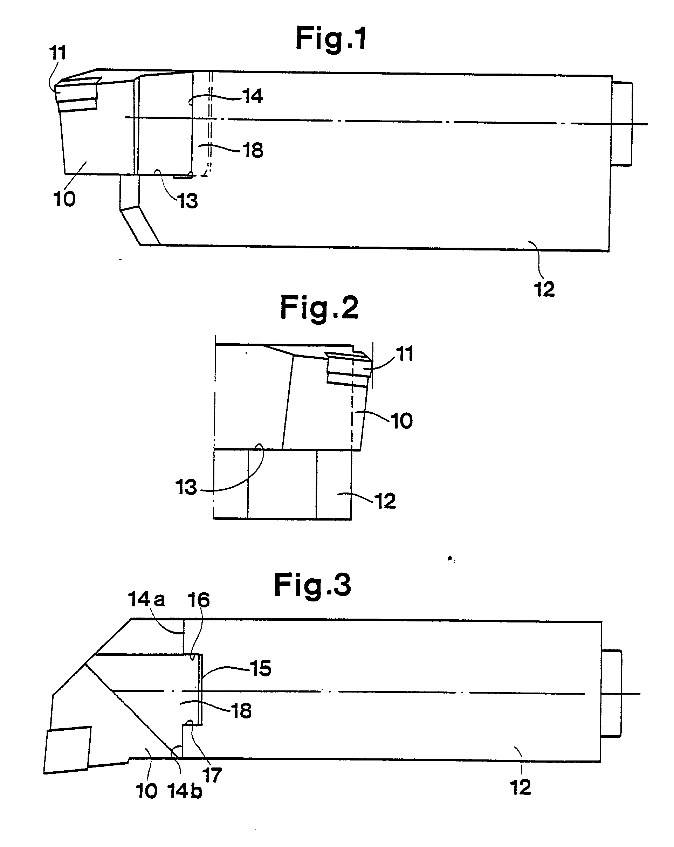

In the drawings, Figure 1 shows a side view of one embodiment according to the invention, wherein the cutting tool is shown in a right-hand turning version.

Figure 2 shows a front view of the cutting tool in Fig. 1.

Figure 3 shows a top view of the cutting tool in Figs. 1 and 2.

Figure 4 shows a bottom view of the cutting tool in Figs. 1-3.

Figure 5 shows a section taken on the line A-A in Fig. 4.

Figures 6 and 7 show a side view and a top view, respectively, of an alternative embodiment according to the invention.

Figure 8 shows a top view of the forward portion of the holder body according to a further embodiment of the invention and a sectional view taken on the line B-B ; the tool element being detached.

Figure 9 shows a top view and a sectional view taken on the line C-C of the holder body in Fig. 8 ; the tool element being attached.

Corresponding details in the various figures have been given the same reference numerals.

The tool element shown in Figs. 1-5 comprises a tool body 10 which has an insert seat thereon for receiving a cutting insert 11.

The planar outer surface of the cutting insert 11 is disposed in substantially the same plane as the top surface of the tool body 10. The tool body 10 is attached to an elongated shaft 12 at the outer end thereof ; the shaft 12 providing the main body of a tool holder. The shaft 12 has a rectangular cross section and is adapted to be secured to a machine tool, such as a lathe in conventional manner. The tool body has abutment surfaces thereon for abutting corresponding surfaces of the shaft 12. In its clamped position against the forward end of the shaft 12 the tool body 10 is forced against a supporting surface 13 and a supporting end surface 14 perpendicular thereto on the holder body. The supporting end surface 14, which provides one of the above-mentioned corresponding surfaces of the shaft 12, is broken by a recess or bore 15, which extends axially inwardly into the shaft 12.

The axial supporting surface of the tool body 10, thus, is formed by two surfaces 14a, 14b lying in the same transversal plane. The recess 15 is bounded laterally by opposed planar abutting surfaces 16, 17, which extend in the longitudinal direction of the holder body 12 in mutual parallelism. The recess 15 is intended to receive a correspondingly shaped shaft portion or shank 18 on the tool body 10. Thus, the tool body 10 is provided with means for keeping the tool body nonrotational with respect to the holder body 12.

According to the invention the tool body 10 is formed to accommodate reciprocally movable means in form of the forward portion 21 of a drawbar 19. The tool body 10 is clamped against the holder body 12 by means of the drawbar 19, which is longitudinally movable in the holder body 12. The portion 21 of the drawbar is received in a correspondingly shaped groove 20 in the tool body 10.

In the illustrated embodiment the portion 21 is designed as a cylindrically rounded enlargement, which is connected to the main body of the bar 19 over a narrowed cylindrical neck portion 22. The groove 20, which is designed for locking interrelationship with the bar 19 has a corresponding cylindrical shape ; it has, however, a somewhat larger cross section area than the enlarged portion 21. The opening of the groove 20 is narrowed by means of projections 23, 24 which project into the groove from both sides thereof. The projections 23, 24 and the portion 21 are provided with coacting cam surfaces for expanding the shaft portion 18 so as to force the side faces 25, 26 against the abutting surfaces 16, 17 in the bore 15 upon a movement of the drawbar 19 toward the cam surfaces of the shaft portion 18. The groove 20 terminates at the underneath side of the tool body 10, while its upward extent is limited by the planar top surface of the tool body 10. Due to this design problems caused by accumulation of chips in the joint are eliminated. Such accumulation would decrease the life of the joint and deteriorate its ready disassembling during exchange of the tool element.

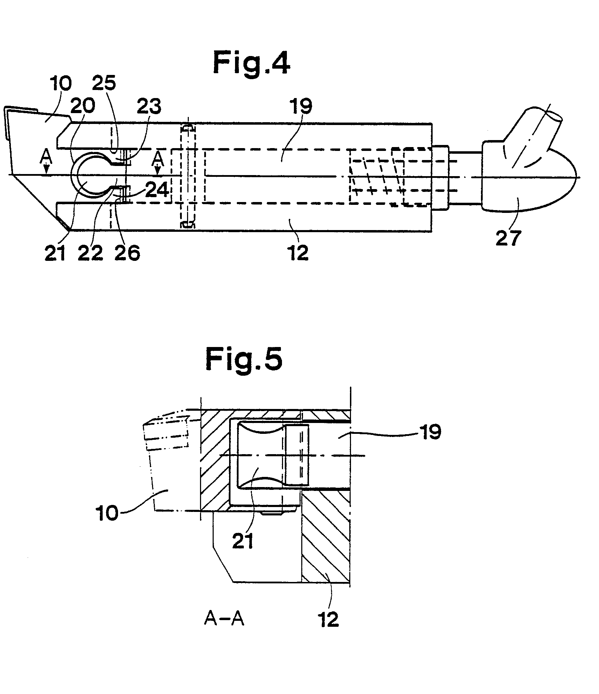

When the tool body 10 is to be clamped against the holder body 12 the tool body is first pushed thereagainst so that its bottom surface rests against the supporting surface 13 and its rear end surface rests against supporting end surfaces 14a, 14b. The enlarged portion 21 of the bar 19 is then received in the groove 20, while the shaft portion 18 of the tool body 10 is received in the recess 15. During tightening of the bar 19 by means of a suitable operating means, such as a member 27 rotatably screwed to the bar, the tool body 10 is forced against the end surfaces 14a, 14b. When the bar 19 is further tightened the projections 23, 24 are caused to expand in opposite directions in the transversal direction of the holder body 12. The expansion of the projections 23, 24 is caused due to the coacting cam surfaces on the portion 21 adjacent to the neck portion 22 and on the projections 23, 24, see Fig. 4. Upon a slight expansion of the projections 23, 24, the latter are forced against the abutting surfaces 16, 17. Thus, a high compression force is applied on both side faces 25, 26 of the shaft portion 18, thereby ensuring that the joint members have no play between them. In order to adapt the design of the tool element to an automatized handling thereof the recess 15 for the tool element is symmetrical with respect to a vertical plane through the axial centre line of the holder body 12. Tool elements 10, thus, of left-hand as well as right-hand design can be mounted in the same holder body 12.

In the illustrated embodiment the enlarged portion 21 of the bar 19 is cylindrically rounded. It is to be understood, however, that various modifications of this portion can be made. For instance, the widened portion can be dove-tailed and the groove 20 given a corresponding shape.

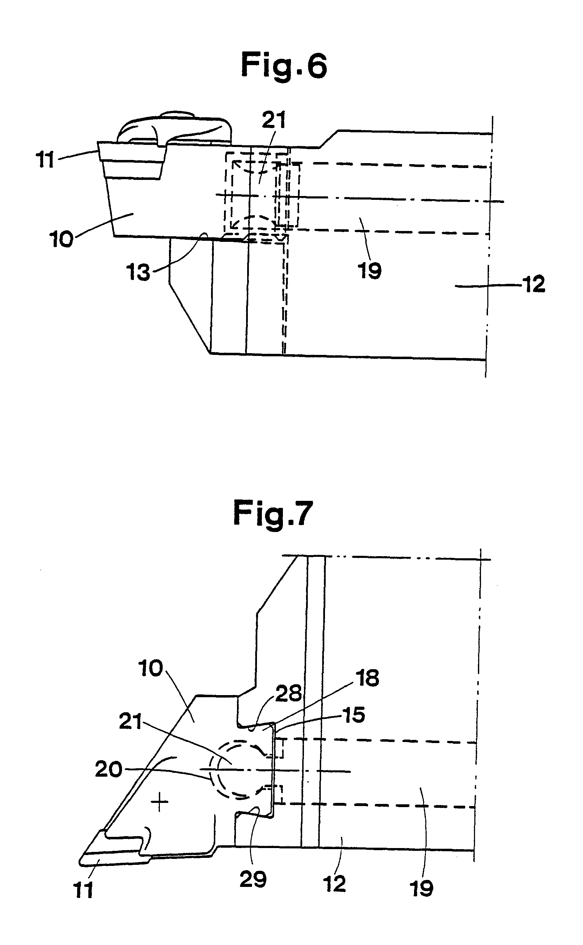

In Figs. 6 and 7 an alternative embodiment of the invention is shown, wherein the shaft portion 18 of the tool body 10 and the front end of the holder body 12 are interconnected by means of a dove-tail joint. Thus, the mouth of the recess 15, which receives the shaft portion 18, is narrowed by means of mutually opposed wedge surfaces 28, 29 adapted for cooperation with complementary supporting surfaces on the shaft portion 18. The design of the drawbar 19 and the groove 20, which receives the enlarged portion 21 of the bar 19, is the same as that shown in Figs. 1-5. Alternatively, how ever, as above-mentioned also the connection between the drawbar 19 and the groove 20 can be made as a dove-tail joint.

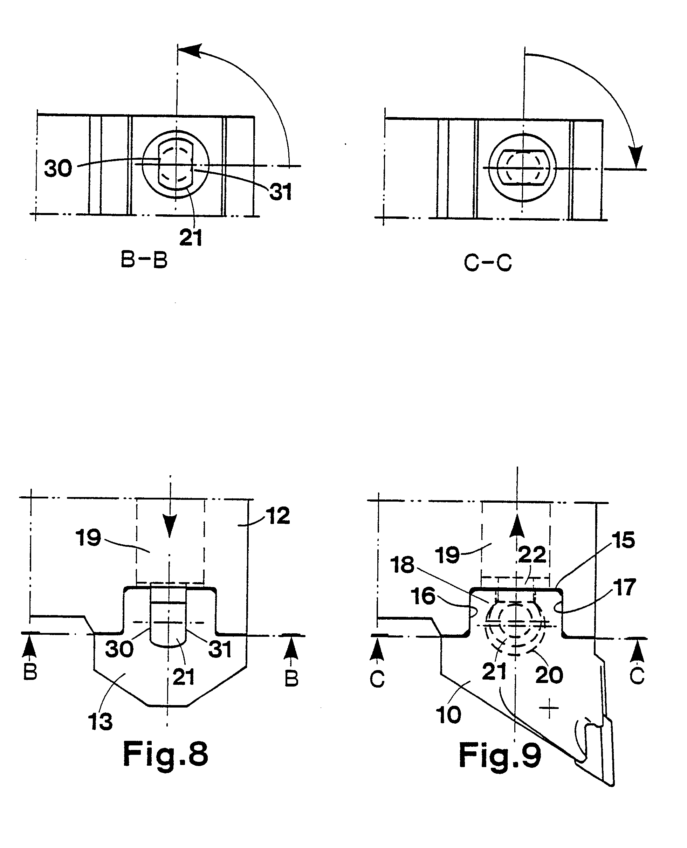

In Figs. 8, 9 a further embodiment according to the invention is shown having a modified connection between the holder body 12 and the tool body 10. In similarity with the embodiment according to Figs. 1-5 side faces on the shaft portion 18 of the tool body are planar and parallel with the abutting surfaces 16, 17 in the recess 15. The end portion 21 of the drawbar, however, has the shape of a flattened cylindrical enlargement having two parallel and oppositely directed planar surfaces 30, 31. The distance between the surfaces 30, 31 corresponds to the diameter of the neck portion 22 on the drawbar, which neck portion interconnects the enlargement 21 and the main body of the drawbar 19.

According to this embodiment the drawbar 19 is not tightened until the tool body 10 is placed in its position and the drawbar then is rotated 90° from the releasing position shown in Fig. 8 to the locking position shown in Fig. 9. Such a design allows insertion of the tool element into the recess 15 in the holder body 12 either straight from above or straight from in front. The latter insertion technique is desired in a mechanized exchange of the tool element.

**Claims**

1. A tool element for a machine tool comprising a tool body (10) having an insert seat thereon for receiving an insert (11), and having a first abutment surface thereon for abutting a corresponding first surface (14) of a holder body (12) and with means (16, 17 ; 28, 29) thereon to keep said tool body nonrotational with respect to the holder body (12), and having a shank (18) integral with the tool body (10), said shank being receivable in a bore (15) of the holder body (12), characterized in that the shank (18) is in one piece and expansible, the tool body (10) is formed to accommodate reciprocally movable means (21), said expansible shank and movable means comprise coacting cam surfaces for expanding said expansible shank so as to lock said shank in the bore (15) of the holder body (12) upon a movement of said movable means toward the cam surfaces of the expansible shank (18).

2. A tool element according to claim 1, wherein the tool body (10) is provided with a groove (20) which comprises a cylindrical widened portion.

3. A tool element according to claim 2, wherein the groove (20) extends from a second abutment surface on the tool body (10) adapted to abut a corresponding second surface (13) on the holder body (12) toward an outer surface opposed to said second abutment surface but does not extend completely thereto, said second abutment surface being generally transversal to said first abutment surface.

4. A tool element according to claim 2, wherein the cam surfaces on the shank (18) are formed by the portions of the cylindrical widened portion which are adjacent to the distal and of the shank.

## Patentansprüche

1. Werkzeugelement für eine Werkzeugmaschine mit einem Werkzeugkörper (10) mit einem darauf ausgebildeten Sitz für die Aufnahme eines Einsatzes (11) und mit einer darauf ausgebildeten ersten Anlagefläche für die Anlage mit einer entsprechenden ersten Fläche (14) eines Haltekörpers (12) und mit einer darauf ausgebildeten Einrichtung (16, 17 ; 28, 29), um den Werkzeugkörper drehfest in bezug auf den Haltekörper (12) zu halten und mit einem mit dem Werkzeugkörper (10) eine Einheit bildenden Schenkel (18), welcher Schenkel dazu ausgebildet ist, von einer Bohrung (15) des Haltekörpers (12) aufgenommen zu werden, dadurch gekennzeichnet, dass der Schenkel (18) in einem Stück und ausdehnbar bzw. expandierbar ist und der Werkzeugkörper (10) dazu ausgebildet ist, eine hin- und herbewegbare Einrichtung (21) aufzunehmen, wobei der ausdehnbare Schenkel und die bewegbare Einrichtung zusammenwirkende Nockenflächen umfassen, um den expandierbaren Schenkel auszudehnen und den Schenkel in der Bohrung (15) des Haltekörpers (12) zu verriegeln, wenn sich die bewegbare Einrichtung auf die Nockenflächen des expandierbaren Schenkels (18) zu bewegt.

2. Werkzeugelement nach Anspruch 1, dadurch gekennzeichnet, daß der Werkzeugkörper (10) mit einer Nut (20) versehen ist, welche einen zylindrischen erweiterten Abschnitt aufweist.

3. Werkzeugelement nach Anspruch 2, dadurch gekennzeichnet, daß sich die Nut (20) von einer zweiten Anlagefläche des Werkzeugkörpers (10) aus erstreckt, die dazu ausgebildet ist, an einer entsprechenden zweiten Fläche (13) am Haltekörper (12) gegen eine äußere Fläche anzuliegen, die der zweiten Anlagefläche gegenüberliegt, sich jedoch nicht vollständig bis zu dieser hin erstreckt, und daß sich die zweite Anlagefläche im allgemeinen in Querrichtung in bezug auf die erste Anlagefläche erstreckt.

4. Werkzeugelement nach Anspruch 2, dadurch gekennzeichnet, daß die Nockenflächen am Schenkel (18) von den Abschnitten des zylindrischen erweiterten Abschnittes gebildet werden, die an das distale (körperferne) Ende des Schenkels angrenzen.

## Revendications

1. Elément d'outil pour une machine-outil comportant un corps d'outil (10) présentant un siège de plaquettes pour recevoir une plaquette de coupe (11), et présentant une première surface de butée pour coopérer avec une première surface correspondante (14) d'un corps (12) de porte-outil, des moyens (16, 17 ; 28, 29) étant prévus sur le corps du porte-outil pour maintenir ledit corps d'outil fixe en rotation par rapport au corps (12) du porte-outil, une queue (18) formant une unité avec le corps d'outil (10), cette queue pouvant être reçue dans une cavité (15) pratiquée dans le corps (12) du porte-outil, caractérisé en ce que la queue (18) est d'une seule pièce et expansible et en ce que le corps d'outil (10) est agencé pour recevoir des moyens (21) mobiles de manière alternative, ladite queue expansible et les moyens mobiles comportant des surfaces de came coopérantes pour l'expansion de ladite queue de manière à verrouiller celle-ci dans la cavité (15) du corps (12) du porte-outil lors du mouvement desdits moyens mobiles vers les surfaces de came de la queue expansible (18).

2. Elément d'outil selon la revendication 1, caractérisé en ce que le corps d'outil (10) comporte une gorge (20) qui présente une partie élargie cylindrique.

3. Elément d'outil selon la revendication 2, caractérisé en ce que la gorge (20) s'étend à partir d'une seconde surface de butée pratiquée sur le corps d'outil (10) et agencée pour buter contre une seconde surface correspondante (13) pratiquée sur le corps (12) du porte-outil, vers une surface extérieure opposée à ladite seconde surface de butée, sans s'étendre complètement jusqu'à celle-ci, ladite seconde surface de butée étant d'une manière générale transversale à ladite première surface de butée.

4. Elément d'outil selon la revendication 2, caractérisé en ce que les surfaces de came de la queue (18) sont formées par les zones de la partie élargie cylindrique qui sont adjacentes à l'extrémité distale de la queue.

# Fig.1

11

14

18

10

13

12

# Fig.2

11

10

13

12

# Fig.3

14a   16

15

18

17

10  14b

12

# Fig.4

# Fig.5

A–A

# Fig.6

# Fig.7

B-B

C-C

30

31

21

12

19

30    31

21

13

**Fig.8**

B        B

18
16
19    22
15
17

21    20

10

C        C

**Fig.9**